# EUROPEAN PATENT SPECIFICATION

(11) **EP 1 056 661 B1**
(45) Date of publication and mention of the grant of the patent: **05.11.2003**
(21) Application number: 99901102.6
(22) Date of filing: 08.01.1999
(51) Int. Cl.: B65F 1/14, B65F 1/12, B65F 3/02, B09B 1/00

(54) **PROCESS AND ASSOCIATED INSTALLATIONS FOR THE TREATMENT AND DISPOSAL OF REFUSE**
VERFAHREN UND ZUGEHÖRIGE ANLAGEN ZUR BEHANDLUNG UND ENTSORGUNG VON MÜLL
PROCEDE ET AMENAGEMENTS ASSOCIES POUR LE TRAITEMENT ET L'ELIMINATION DES ORDURES

(30) Priority: 08.01.1998 IT BO980003
(43) Date of publication of application: 06.12.2000
(73) Proprietor: Cambiuzzi, Giulio, 40026 Imola (IT)
(72) Inventor: Cambiuzzi, Giulio, 40026 Imola (IT)
(74) Representative: Gotra, Stefano
(86) International application number: IT9900001
(87) International publication number: WO99035060

(56) References cited:
- WO-A-94/06707
- DE-A- 3 901 920
- DE-A- 4 022 124
- US-A- 3 665 716
- US-A- 5 433 553
- US-A- 5 568 996

## Description

The present invention relates to the field of the treatment and disposal of refuse, in particular solid urban refuse.

The problem of the disposal of solid urban refuse has recently assumed enormous proportions owing to the ever increasing amount of refuse produced in the course of urban life and owing to the need to provide an ever greater number of areas of land and/or installations for the storage or disposal thereof. Although the processes of collecting, treating, selecting, transporting, storing and disposing of the refuse are inseparably connected with one another, the solutions proposed hitherto have generally focused on only one of the above-mentioned stages and have touched only marginally on the problems of disposal overall. In addition, the solutions proposed hitherto have generally sought to solve specific technical problems, often neglecting the fact that the manner of treating refuse has direct repercussions on the social life of an urban community which, in turn, can decide the success or failure of innovative initiatives in the field.
US 5,568,996 discloses a process for the treatment and disposal of refuse having the following stages: collect refuse in a temporary depository arranged below ground level; treat, by breaking up and/or grinding, the refuse collected in the temporary depository in order to reduce the volumetric bulk thereof; convey, selectively, predetermined amounts of refuse of reduced volumetric bulk from the temporary depository to an opening which is arranged above ground level and which is directed towards a transport means.
The aim of the present invention is to provide an overall solution to the problem of treating and disposing of refuse, especially solid urban refuse, by means of a process and associated installations which are convenient to implement, simple and economical to produce and acceptable to the members of an urban community.

Another aim of the present invention is to provide a process for the treatment and disposal of refuse, of which the stages are completely integrated with one another, starting from the collecting system up to the disposal or permanent storage of the refuse.

A further aim of the invention is to provide a process and associated installations which are safe for people and for the environment and which do not cause further environmental harm either in urban zones or even less so in rural zones.

Further features and advantages will become clear from the following detailed description of a preferred embodiment, with reference to the appended drawings which are given purely by way of non-limiting example and in which:
- Figure 1 is a sectional diagrammatic side view of an installation having a depository for the temporary collection of refuse according to the present invention,
- Figure 2 is an enlarged side view of the collector of the installation of Figure 1,
- Figure 3 is a cross-section through the chopping unit of the installation of Figure 1,
- Figure 4 is a cross-section through the hammer mill unit of the installation of Figure 1,
- Figure 5 is a diagrammatic sectional side view of an installation for the permanent storage of refuse according to the invention,
- Figure 6 is a diagrammatic sectional side view of a variant of the installation having a depository for the temporary collection of refuse,
- Figures 7a, 7b illustrate, diagrammatically, possible configurations of subterranean caverns of oil and/or natural gas deposits of the type which are more usually in the shape of a dome,
- Figure 8 is a sectional side view of a variant of the installation having a depository for the temporary collection of refuse according to the present invention,
- Figure 9 is a cross-section on the line IX-IX of Figure 8,
- Figure 10 is a lateral section on an enlarged scale through the chopping unit of the installation of Figure 8,
- Figure 11 is a longitudinal section through a comminuter on the line XI-XI of Figure 10,
- Figure 12 is a longitudinal section through a centrifuge mill on the line XII-XII of Figure 10,
- Figure 13 is a side view of a special motor vehicle for the collection of refuse from the temporary depository of Figure 8, and
- Figure 14 is a rear view of the motor vehicle of Figure 13, in the act of picking up refuse from the temporary depository of Figure 8.

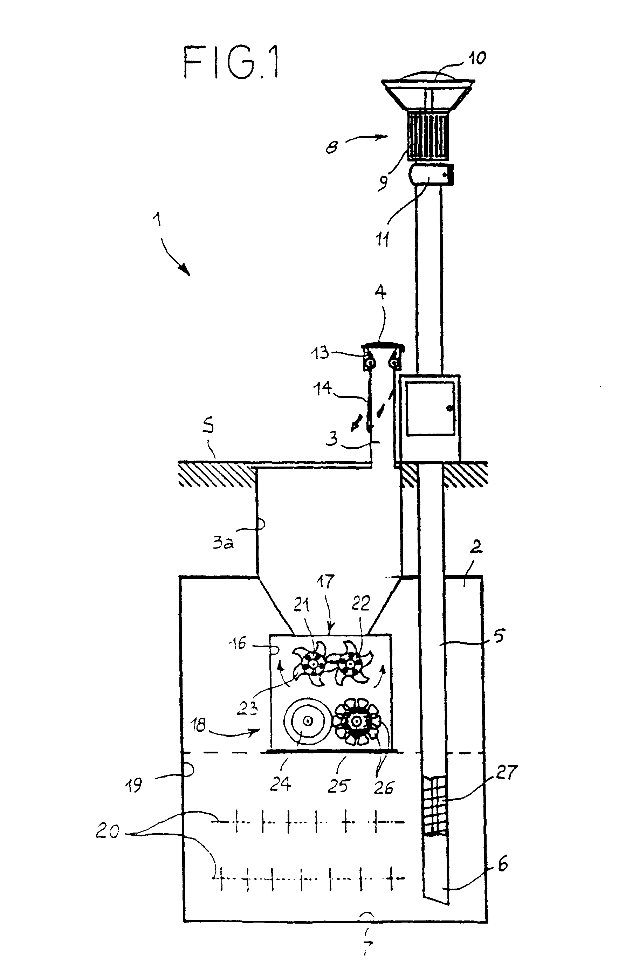

Referring now to Figure 1, an installation 1 for the temporary collection of refuse produced in accordance with the present invention comprises a collecting depository 2 which is preferably buried in earth below road level S in order to be used for the collection of refuse from a specific urban zone. Mounted on the collecting depository 2 is a collector 3 which extends above road level S and which is closed at the top by a cover 4 arranged at a height which can be reached easily by users. A, preferably cylindrical, elongate upright tubular duct 5 is inserted in the collecting depository 2 and its lower end 6 terminates near the base 7 of the depository 2, while its upper end 8 is closed by a filter unit 9 and can be used as a support for an illuminating body 10. One or more telecameras or recording apparatus (not illustrated in the drawing) may be mounted on the upper end 8 of the upright duct 5 for the optional monitoring of the correct use of the installation by users going to the collector 3. Near its upper end 8, the tubular duct 5 communicates with a discharge outlet 11 which is preferably in a form such as to permit the rapid attachment of a tube carried by a refuse-transporting means, for example a tanker. A screw 27 or similar means is mounted along most of the tubular duct 5.

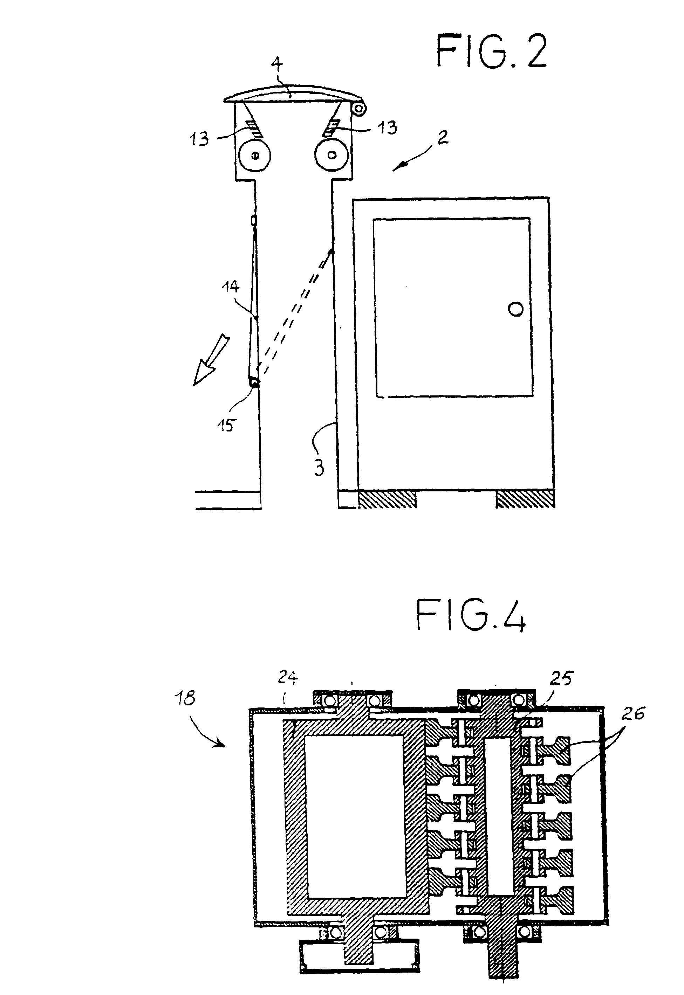

As is shown more clearly in Figure 2, sensors 13 used for detecting ferrous materials are mounted in the region of the mouth 12 of the collector 3, near the cover 4, and are connected to a consent device which controls the opening and closing of a chute port 14 which is normally closed and which is mounted on the collector 3 in such a manner that it oscillates relative to a substantially horizontal axis 15.

As shown in Figure 1, the inside of the collecting depository 2 accommodates a chamber 16 for the treatment of refuse, inside which a first rotary unit 17 in the form of a chopper and a second rotary unit 18 in the form of a hammer mill arc arranged one above the other. The lower portion of the chamber 16 communicates with a large collecting hold 19, inside which rotary agitating units 20 are rotatably mounted.

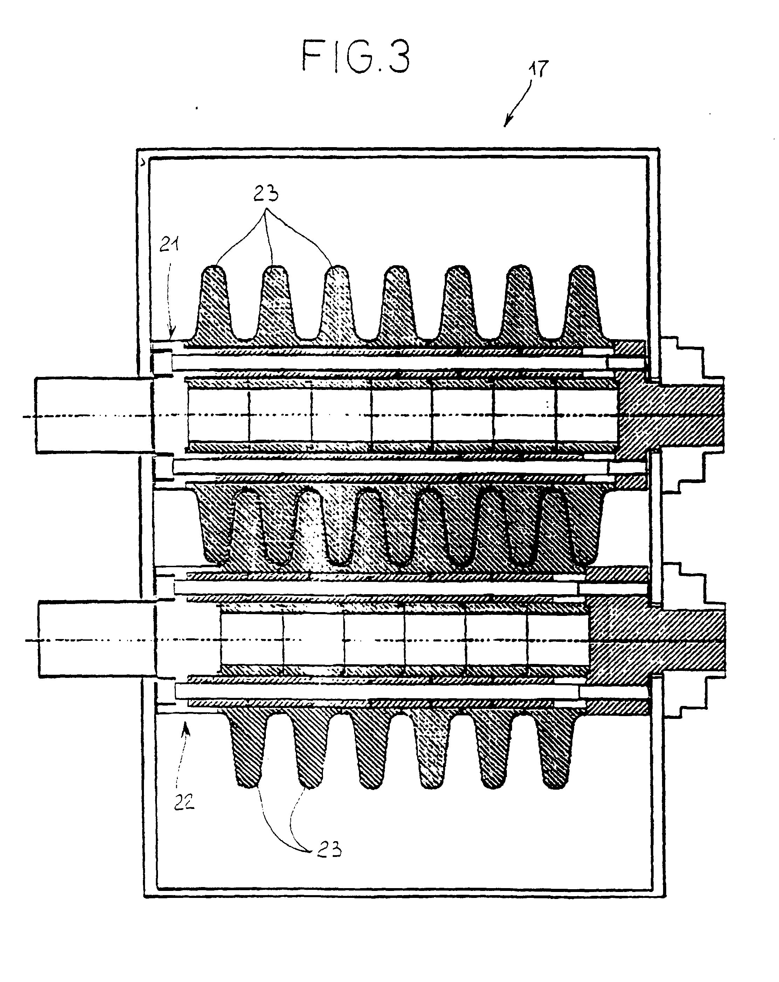

In detail, the rotary chopping unit 17, shown in cross-section in Figure 3, comprises two chopping rotors 21, 22 each comprising a series of curved blades 23 arranged radially on the chopping rotors. The transverse profile of the curved blades 23 and the relative arrangement on the two chopping rotors 21, 22 are such that, in a central region between the two rotors, the blades on one rotor almost entirely fill the spaces between the blades of the other rotor. The two rotors rotate in opposite senses, in the sense indicated by the arrows in Figure 1, and at different speeds, in such a manner as to subject the refuse passing through the chopping unit 17 to combined crushing, cutting, rag-grinding and comminuting actions.

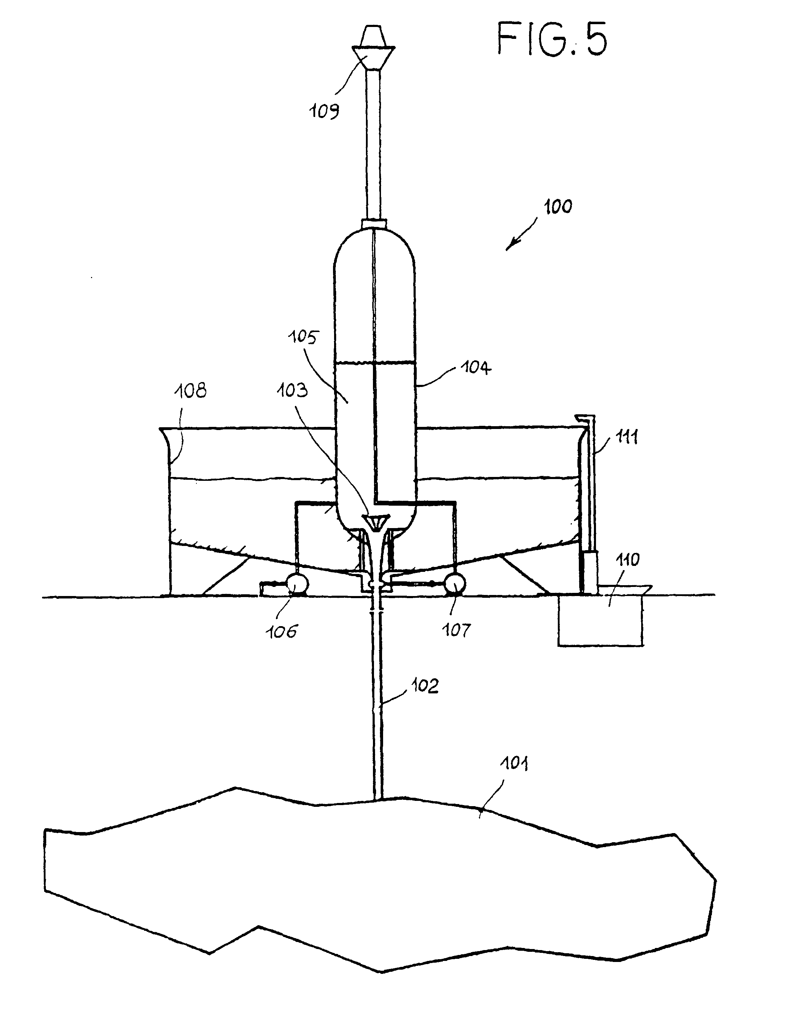

The rotary hammer mill unit 18, shown in cross-section in Figure 4, comprises a rotating drum 24 having a substantially cylindrical circumferential surface, and an opposed percussion rotor 25, on the surface of which are articulated hammer elements 26 which oscillate independently of one another about axes parallel to the axis of the percussion rotor 25. While the rotating drum 24 turns at a relatively low speed, the percussion rotor 25 rotates on its axis at a very high speed in such a manner as to break up and pulverise the refuse coming from the chopping unit 17.

Figure 5 shows diagrammatically an installation 100 for the permanent storage of refuse taken, for example, from the outlet 11 of the temporary depository installations of the type described above. The storage installation 100 is placed preferably in a region above an exhausted deposit 101, for example a petroleum or natural gas deposit or the like. A duct 102 which already exists or is produced for the purpose, connects, with the interposition of a plugging member 103, the deposit 101 to an elongate reservoir 104 arranged above it, which is suitable for containing a water column 105 supplied by a pumping unit 106. The greater the amount of water admitted into the elongate reservoir 104 the greater is the pressure to which it is subjected by the compressed air volume in the upper portion of the reservoir 104.

A pumping unit 107 communicates selectively with the duct 102 in order to extract, before using the deposit 101 for the permanent storage of refuse, any traces of combustible gas still present, which are directed to the burner 109. The pumping unit 107 also provides for the production of a partial vacuum inside the deposit 101, for reasons which will become clear in the course of the description.

Also communicating with the duct 102 is a disposal vessel 108 into which are poured refuse which is in the form of moistened powder or pulp and which has been treated by the installations of the type described above, and also, directly, fluid products, such as, for example, used oils. A mixer of generally known type (not shown in the drawing) is set in motion inside the disposal vessel 108. A chopper with a mill 110 substantially similar to that in Figure 1 is placed at the side of the vessel and provides for the reduction to pulp of refuse coming from zones in which, for reasons of cost or low urbanisation density, the collection of refuse is still carried out in accordance with the traditional method. The chopper with a mill 110 is provided with a discharge means 111, for example of the screw type described above, which discharges the pulp directly into the vessel 108.

For the treatment of solid urban refuse, the first stage of collection, treatment and temporary depositing is carried out by the installation of Figure 1. The refuse resulting from domestic and business activities can be unloaded, preferably previously enclosed in sacks of known type, into the collector 3, the mouth of which is accessible by lifting the cover 4. Preferably, the lifting of the cover 4 activates a recording device, for example a telecamera or a photographic apparatus, mounted on the top 8 of the piping 5, in order to identify any persons not making proper use of the installation 1 for the treatment and depositing of refuse. The sensors 13 detect the presence of any ferrous matcrials of a given thickness inside the sack of refuse thrown into the collector 3 and, in the case of positive detection, bring about the opening of the port 14 which, tilting towards the inside of the collector 3, closes the passage to the depository 2 and opens a discharge for the return of the sack of refuse to the user. If, however, the sensors 13 do not detect the presence of substantial amounts of ferrous material, the refuse is directed to the rotary chopping unit 17 which tears it, comminutes it and chops it. Preferably, above the chopping unit 17, the collecting duct 3 communicates with a funnel-shaped loader 3a acting as a storage unit for collecting the refuse just deposited by the users. The chopping unit can operate continuously, throughout the day. or it can be activated discontinuously, for example at predetermined times (preferably at times when energy is less expensive, for example during the night) or when a predetermined level of refuse has been reached in the funnel-shaped loader 3a.

After having passed through the chopping unit 17, the comminuted refuse passes through the hammer mill unit 18 which converts the refuse into a pulp which is deposited in the collecting hold 19 and is kept there even for several days. The agitators 20 maintain the movement of the refuse pulp deposited in the hold in order to prevent the thickening and consequent detrimental compacting thereof.

At a predetermined frequency, which can be varied in accordance with the amount of refuse deposited in each specific installation 1 serving a specific urban zone, a transport tanker provided with a suction tube, preferably a flexible suction tube, approaches the projecting portion of the tubular duct 5. When the suction tube of the tanker has been connected to the outlet 11, the screw 27 is activated and transports the refuse pulp from the bottom of the collecting hold 19 to the outlet 11 and thus to the tanker.

The contents of a plurality of tankers are then deposited in the vessel 108 of the permanent storage installation 100, illustrated in Figure 5, in which fluid waste products, for example used oils, and the pulp produced by the chopper and mill 110 also converge. In an initial stage of starting up the installation, in the case where the subterranean cavern comprises leak-proof cavities, the pump 107 is activated to send the gaseous residues of the exhausted deposit 101 to the burner 109, and to create a partial vacuum in the deposit. At predetermined times, for example on reaching a fixed pulp level inside the vessel 108, the passage to the duct 102 and therefore to the exhausted deposit 101 is opened so that the pulp can penetrate a specific distance, aided by the partial vacuum created in the exhausted deposit. At the same time, the plugging member 103 is opened and brings the reservoir 104 into communication with the duct 102 full of refuse pulp. The weight of the water column 105, which is subjected to the further pressure obtained in the reservoir 104, pushes the refuse pulp violently into the exhausted deposit 101, also promoting the distribution thereof inside the subterranean cavities even in cases where the surfaces of the cavities are very uneven. After some time, the refuse contained in the exhausted deposit 101 starts to ferment, producing further combustible gas resources which can be extracted using the pump 107, the outlet of which is for that purpose connected to a distribution network or a storage system of known type instead of to the burner 109.

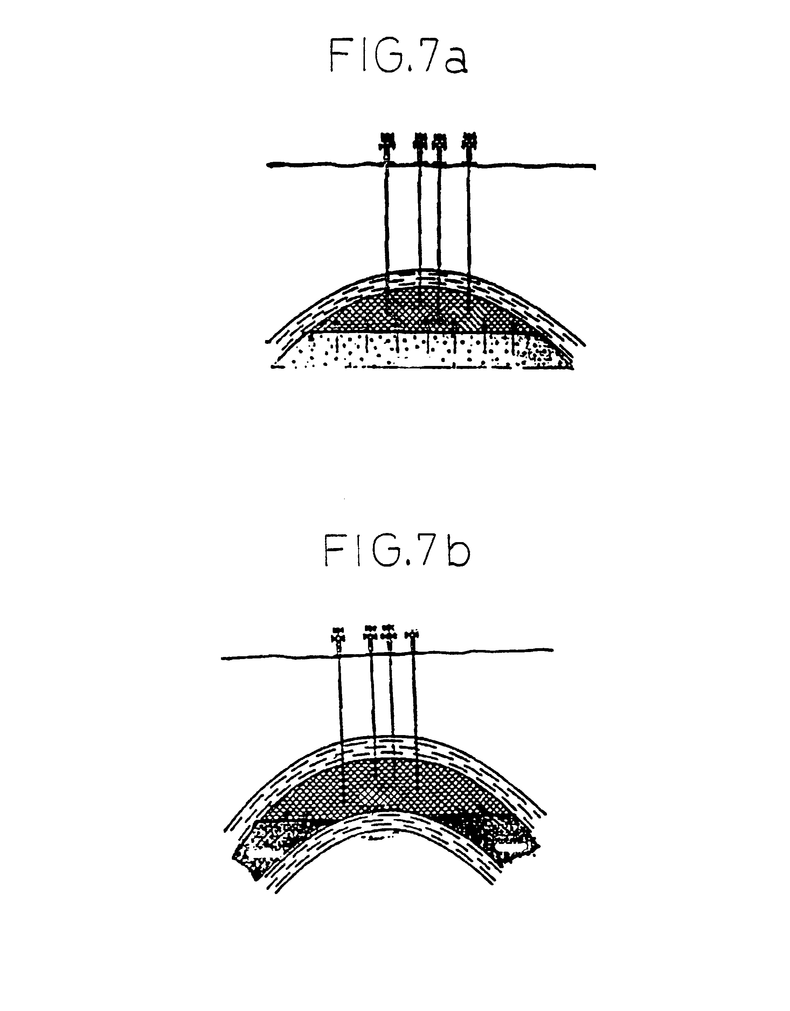

In most cases, as illustrated diagrammatically in Figures 7a and 7b, oil and natural gas deposits comprise substantially dome-shaped subterranean pockets which, when the deposit has been exhausted, are usually filled with water of subterranean origin. In that case, of course, it is not possible to create beforehand a partial vacuum inside the cavern of the deposit but the extremely high pressure generated in the storage installation 100 nevertheless ensures that a force is obtained sufficient to enable the pulp to be introduced into the cavern of the exhausted deposit.

A variant of the present invention provides for the further treatment of the refuse pulp by compaction and the production of small bodies, for example in the form of granules, pellets, ovoids and the like. That further treatment may concern the entire disposal of solid urban waste, or only a portion thereof, it being possible to combine the collection of pulp and compacted bodies.

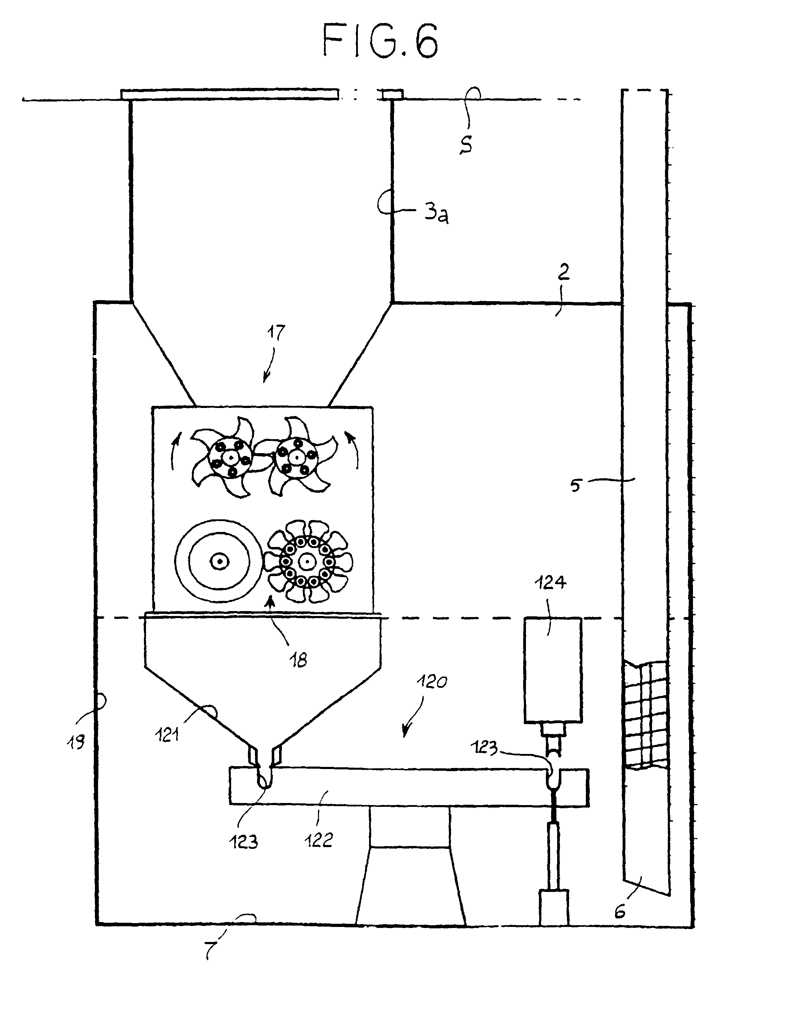

The installation of Figure 6, which is to a great extent similar to that previously described with reference to Figure 1, can be used for the temporary storage of those compacted bodies. The temporary collection reservoir 7 accommodates a compactor device 120, for example comprising a funnel-shaped collector 121 for sending the pulp produced by the chopper 17 and by the hammer mill 18 to a rotary collecting plate 122 in which recesses 123 are formed. The pulp collected in the recesses 123 is then sent, for example by rotation of the collecting plate 122, to a press 124. The compacted solid bodies are then discharged into the depository 7 and removed by means of the above-described raising device 27, for example having a screw.

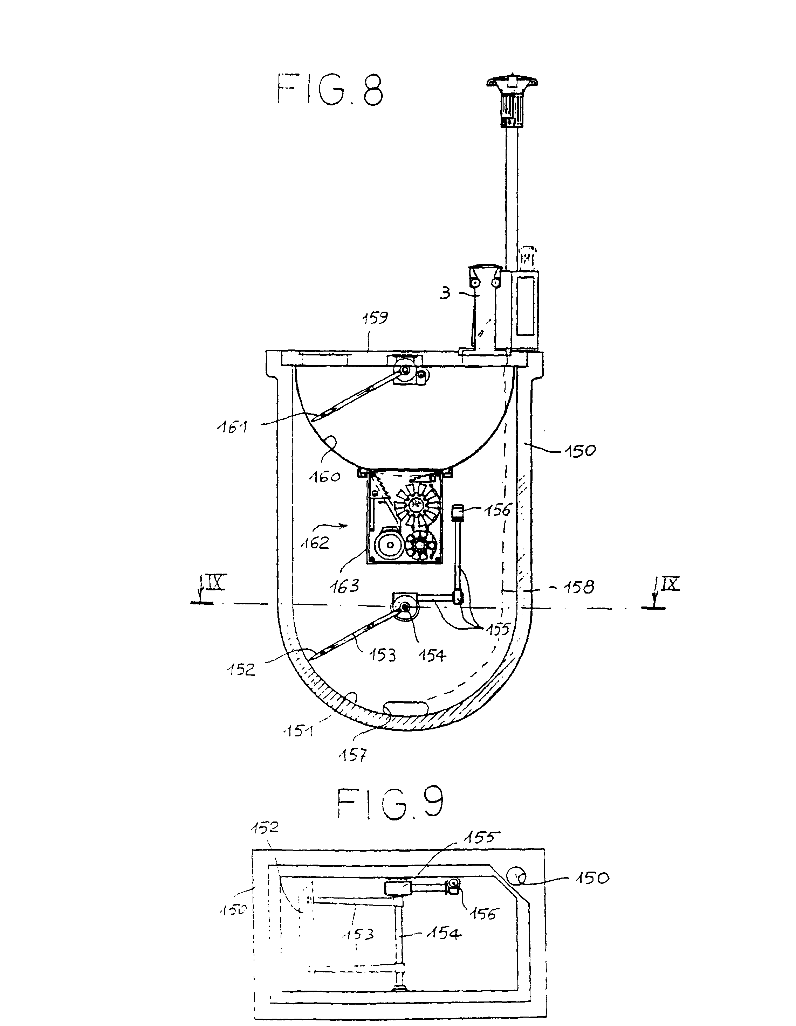

Figure 8 shows a variant of the installation for the temporary storage of refuse. The installation comprises a vessel 150 which is rectangular in plan (see Figure 9) which makes it suitable for burying in the area of pavements or the like. In addition, the vessel 150 comprises a semi-cylindrical base 151 which especially facilitates excavation for its burial, for example by means of the shovel of an excavator or the like. Furthermore, the semi-cylindrical base 151 is better able to collect the refuse pulp without the latter coming to a standstill in comers that are difficult to reach. The base 151 is swept by a lower spatula 152 secured to the ends of two arms 153 fastened to a shaft 154 driven by a transmission 155 connected to a motor 156. In the lower portion of the base 151 is an opening 157 communicating with a duct 158 which extends along the inner side of the vessel 150 and terminates outside for the periodic removal of the refuse pulp, as will be explained in detail hereinafter. The duct 158 is of course closed selectively by a cover or the like.

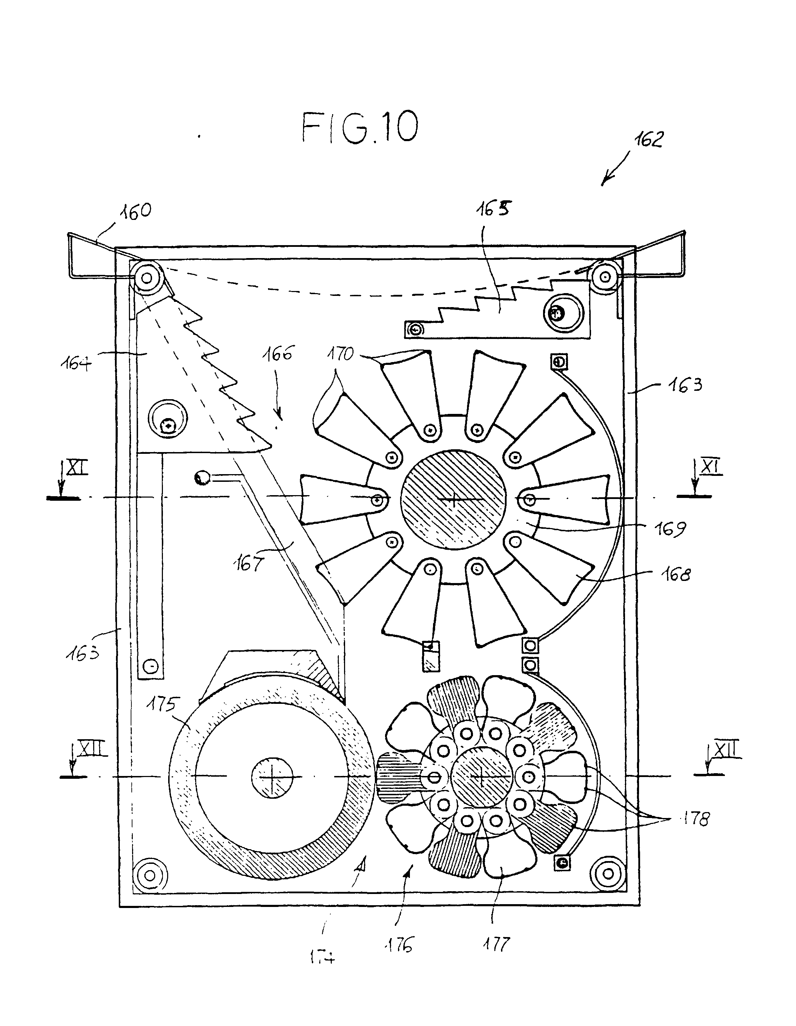

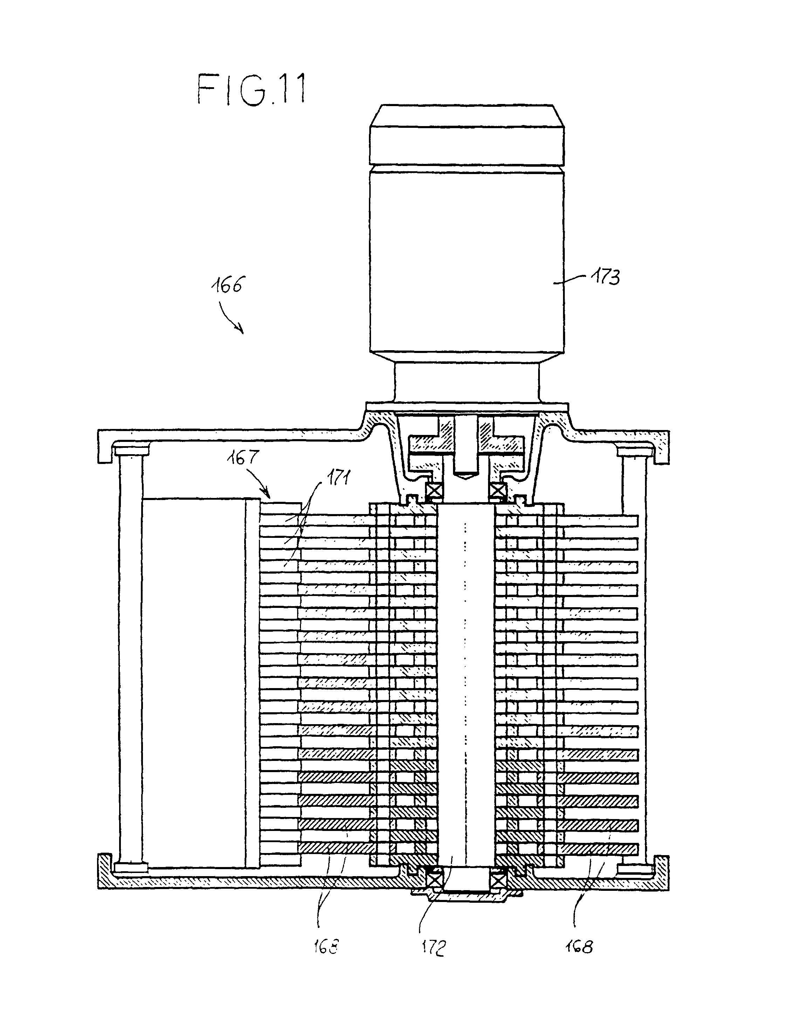

The upper portion of the vessel 150 is closed by a plate 159 on which is mounted the collector 3 and beneath which is secured a semi-cylindrical basin 160 which is swept by an upper spatula 161 similar to the lower spatula 152. The plate 159 preferably closes the vessel 150 hermetically, for reasons which will become clearer hereinafter. The base of the basin 160 opens onto a chopping unit 162, the casing 163 of which is connected to the basin. As is shown more clearly in Figure 10, the chopping unit 162 comprises two oscillating or orbital conveyors 164, 165 which convey the refuse coming from the basin 160 to a first comminuter 166 comprising a preferably fixed comb 167 which interacts with a set of cutting appendages 168 mounted for oscillation on a first rotor 169. Preferably, although this is not to be regarded as a limitation, the cutting appendages are of a trapezoidal shape with two inserts 170 of harder material on the working edges. As is shown more clearly in Figure 11, the cutting appendages 168 are mounted for oscillation on the rotor 169, independently of one another, and are regularly spaced along the axis of the rotor 169 to the same extent as grooves 171 of the comb 167. The rotor 169 comprises a shaft 172 to which a drive motor 173 is splined.

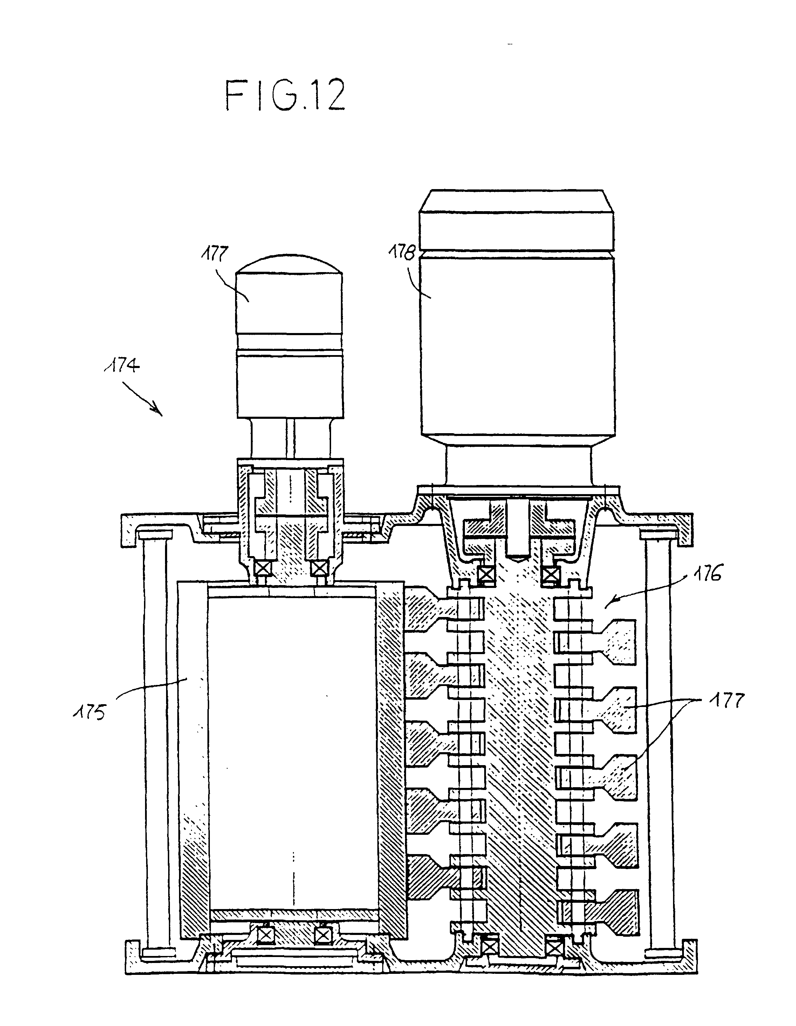

Arranged below the comminuter 166 (sce Figure 10) is a centrifuge mill 174 comprising an anvil roller 175 and a hammer rotor 176 comprising a series of hammers 177 mounted for oscillation on the circumference thereof. The hammers 177 preferably comprise inserts 178 of harder material. The anvil roller 175 and the hammer rotor 176 are driven in rotation by two respective motors 177, 178 (see Figure 12).

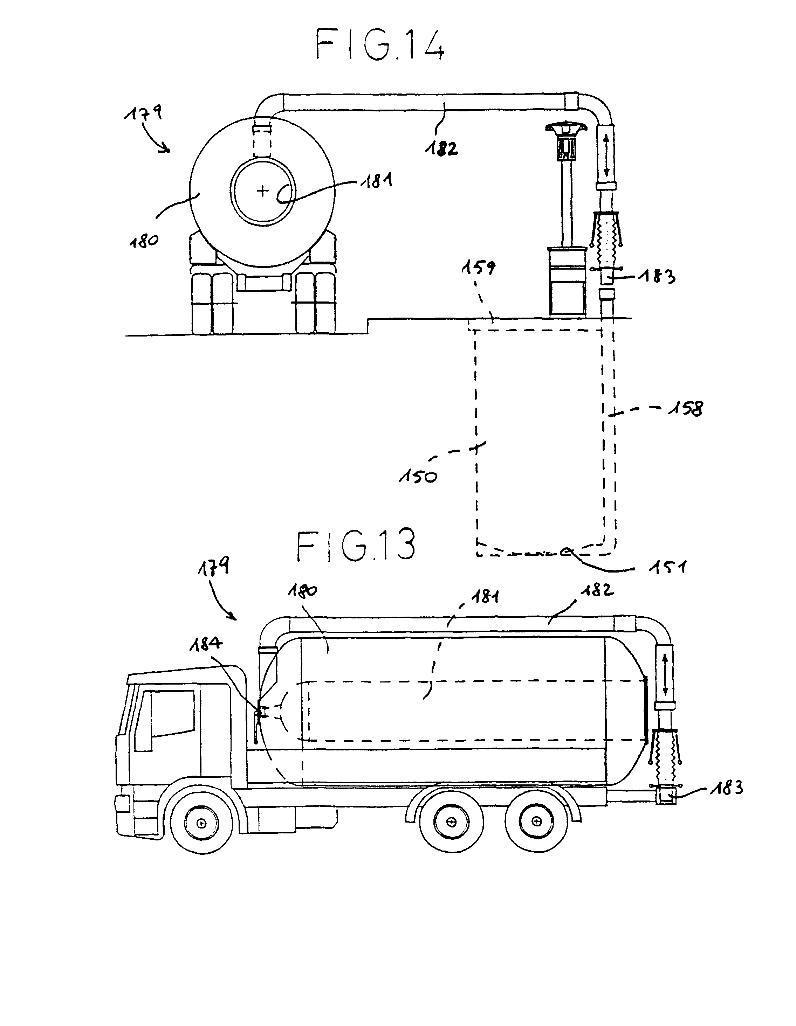

In a case where, as mentioned above, the vessel 150 is closed hermetically by the plate 159 or in similar manner, it is possible to use a special motor vehicle 179, illustrated in Figures 13 and 14, in order to empty it periodically. The motor vehicle 179 comprises a tank 180 at the centre of which a cylinder 181 of compressed gas, for example compressed air, is arranged longitudinally. The motor vehicle 179 comprises an articulated or oscillating collecting tube 182 having an end provided with a mouth 183 having a leak-proof coupling, preferably a rapid coupling, suitable for connection to the outlet mouth of the duct 158 of the vessel 150. A three-way valve 184 brings the tube 182 selectively into communication with the tank 180 or with the cylinder 181, or closes the tube 182.

For the periodic collection of the refuse pulp from the base 151 of the vessel 150, the motor vehicle 179 is brought into the vicinity of the vessel 150 in such a manner that the tube 182 can be orientated so that the coupling 183 can be inserted in a leak-proof manner in the outlet mouth of the duct 158. A first operation of the valve 184 brings the tube 182 into communication with the cylinder 181 of compressed gas. The compressed gas penetrates to the base 151 of the vessel 150 with the following two results: the inside of the vessel 150 is placed under a pressure greater than atmospheric pressure, and the stream of compressed air or gas bubbles into the pulp deposited on the base of the vessel 150, thus displacing it. When the desired pressure is reached inside the vessel 150, the valve 184 is switched to the position in which the tube 182 is in communication with the tank 180. The pressure inside the vessel 150 therefore pushes the refuse pulp located on the base 151 into the duct 158 and, through the tube 182, into the collecting tank 180 on the motor vehicle 179, which can then transport it to the permanent storage installation described above.

The process of the present invention, which can be effected in a preferred form, but not exclusively, by the methods described above and using the installations indicated above. therefore solves comprehensively and fundamentally the problem of the treatment and disposal of refuse, in particular solid urban refuse, exploiting underground spaces which are still largely unused, both in urban regions for the temporary depositing and the treatment of refuse deposited by users, and in regions of exhausted deposits, which are at present completely abandoned.

Naturally, the principle of the invention remaining the same, the forms of embodiment and the details of construction may be varied widely with respect to those described and illustrated, without thereby departing from the scope of the present invention.

## Claims

1. A process for the treatment and disposal of refuse, comprising the following stages:
- collect refuse, in particular solid urban refuse, in at least one temporary depository **(2),** arranged below ground level,
- detect the presence of any ferrous materials of a given thickness in the vicinity of an inlet duct (3, 3a) for the refuse,
- in the case of positive detection, intercept the refuse in order to prevent its introduction into the temporary depository, otherwise
- treat, by breaking up and/or grinding, the refuse collected in the at least one temporary depository **(2)** in order to reduce the volumetric bulk thereof,
- convey, selectively, predetermined amounts of refuse of reduced volumetric bulk from the at least one temporary depository **(2)** to an opening which is arranged above ground level and which is directed towards a transport means,
- deposit the refuse of reduced volumetric bulk in a permanent storage installation **(100)** comprising a collecting vessel **(108)** communicating selectively with a subterranean cavern, preferably an exhausted deposit **(101)**,
- open selectively communication between the collecting vessel **(108)** and the subterranean cavern **(101)** in order to discharge there predetermined amounts of refuse of reduced volumetric bulk.

2. A process according to claim 1, **characterised in that** the stage of conveying the refuse from the at least one temporary depository **(2)** to the transport means is preceded by a stage of conveying a pressurised gas into the temporary depository **(2).**

3. A process according to claim 1, **characterised in that** the stage of discharging the refuse into the subterranean cavern **(101)** is simultaneous with or slightly precedes the discharge into the cavern of a fluid under extremely high pressure which removes the refuse from the accumulation region, distributing it in the cavern.

4. A process according to claim 3, **characterised in that** the fluid under extremely high pressure is a water column **(105)**.

5. A process according to any one of the preceding claims, **characterised in that** the refuse of reduced volumetric bulk assumes the form of a moistened powder or pulp.

6. A process according to claim 5, **characterised in that** the moistened powder is subsequently compacted to produce small bodies, for example in the form of granules, pellets, ovoids and the like.

7. A process according to any one of claims 1 to 6, **characterised in that** a predetermined amount of fluid is placed under pressure in the permanent storage installation (100) by autoclave means fed by first pump means (106).

8. A process according to claim 7, **characterised in that** the subterranean cavern is leak-proof and is placed under a partial vacuum beforehand and maintained under a partial vacuum by second pump means (107), the gases extracted from the cavern by the second pump means (107) being selectively conveyed to a burner or to a distribution network or to an installation for the storage of combustible gases.

9. A temporary depository installation **(2)** for the treatment and disposal of refuse by the process according to any one of the preceding claims, comprising a lower chamber **(19)** suitable for arrangement below ground level, an inlet duct **(3, 3a)** for the solid waste, which duct **(3, 3a)** communicates with the lower chamber **(19)** with the interposition of breaking-up and/or grinding means **(17, 18), (162),** and an outlet duct **(5), (158)** for the refuse having reduced volumetric bulk, which duct terminates outside the lower chamber **(19)** above ground level;
**characterised in that** means **(13)** for detecting ferrous materials are mounted in the vicinity of the inlet duct **(3)**, an interception device **(14)** being coupled to the detection means in order to prevent the introduction into the temporary depository of refuse containing ferrous materials in an amount higher than a predetermined threshold value.

10. A temporary depository installation according to claim **9, characterised in that** it comprises means **(27)** for the selective conveyance of refuse which are located in the outlet duct **(5)** in order to transfer the refuse of reduced volumetric bulk from the temporary depository to collecting means which can be arranged outside it.

11. A temporary depository installation according to claim **10, characterised in that** the conveyance means comprise screw means **(27).**

12. A temporary depository installation according to claim **9**, **characterised in that** the breaking-up and/or grinding means comprise a first rotary unit **(17)** in the form of a chopper and a second rotary unit **(18)** in the form of a hammer mill which are in a cascade arrangement one behind the other.

## Patentansprüche

1. Verfahren zur Behandlung und Entsorgung von Müll, enthaltend die folgenden Phasen:
- Sammeln des Mülls, insbesondere der festen Haushaltsabfälle, in vorübergehenden Deponien (2), die unterhalb der Bodenfläche angelegt sind;
- Erfassen des Vorhandenseins von eisenhaltigem Material von einer bestimmten Stärke in der Nähe eines Eintrittskanals (3, 3a) für den Müll;
- im Falle des positiven Erfassens, Abfangen des Mülls, um dessen Einleiten in die vorübergehende Deponie zu verhindern, andernfalls
- Behandlung durch Zerkleinern und/oder Zermahlen des in der wenigstens einen vorübergehenden Deponie (2) gesammelten Mülls, um das Volumen desselben zu reduzieren;
- wahlweises Fördern bestimmter Mengen von in seinem Volumen reduzierten Müll von wenigstens einer vorübergehenden Deponie (2) an eine Öffnung, die oberhalb der Bodenfläche angeordnet und zu einem Transportmittel hin gerichtet ist;
- Deponieren des Mülls von reduziertem Volumen in einem Endlager (100), enthaltend eine Sammelwanne (108), die wahlweise mit einer unterirdischen Kaverne in Verbindung steht, vorzugsweise eine erschöpfte Deponie (101);
- wahlweises Öffnen der Verbindung zwischen der Sammelwanne (108) und der unterirdischen Kaverne (101), um bestimmte Mengen von Müll von reduziertem Volumen zu entladen.

2. Verfahren nach Patentanspruch 1, **dadurch gekennzeichnet, dass** der Phase des Förderns des Mülls von der wenigstens einen vorübergehenden Deponie (2) zu dem Transportmittel eine Phase des Einleitens von unter Druck stehendem Gas in die vorübergehende Deponie (2) vorausgeht.

3. Verfahren nach Patentanspruch 1, **dadurch gekennzeichnet, dass** die Phase des Entladens des Mülls in die unterirdische Kaverne (101) gleichzeitig mit oder leicht vor dem Einleiten in die Kaverne eines unter extrem hohem Druck stehenden Fluids erfolgt, welches den Müll aus dem Bereich der Anhäufung entfernt und ihn in der Kaverne verteilt.

4. Verfahren nach Patentanspruch 3, **dadurch gekennzeichnet, dass** das unter extrem hohem Druck stehende Fluid eine Wassersäule (105) ist.

5. Verfahren nach einem beliebigen der vorstehenden Patentansprüche, **dadurch gekennzeichnet, dass** der Müll von reduziertem Volumen die Form von feuchtem Staub oder Schlamm annimmt.

6. Verfahren nach Patentanspruch 5, **dadurch gekennzeichnet, dass** der feuchte Staub anschliessend kompaktiert wird, um kleine Körper herzustellen, zum Beispiel körnerförmig, in Form von Pellets, eierförmig und so ähnlich.

7. Verfahren nach einem beliebigen der Patentansprüche von 1 bis 6, **dadurch gekennzeichnet, dass** eine bestimmte Menge von Fluid unter Druck in das Endlager (100) eingegeben wird, und zwar mit Hilfe einer Autoklave durch erste Pumpenmittel (106).

8. Verfahren nach Patentanspruch 7, **dadurch gekennzeichnet, dass** die unterirdische Kaverne lecksicher ist und schon vorher unter ein teilweises Vakuum gesetzt ist und durch zweite Pumpenmittel (107) unter einem teilweisen Vakuum gehalten wird, wobei die aus der Kaverne abgezogenen Gase durch die zweiten Pumpenmittel (107) wahlweise an einen Brenner oder an ein Verteilernetz oder an eine Anlage zum Lagern von brennbaren Gasen geleitet werden.

9. Vorübergehende Deponie (2) zur Behandlung und Entsorgung von Müll durch das Verfahren nach einem beliebigen der vorstehenden Patentansprüche, enthaltend eine untere Kammer (19), die geeignet ist, unterhalb der Bodenfläche angeordnet zu werden, einen Eintrittskanal (3, 3a) für den Festabfall, welcher Kanal (3, 3a) mit der unteren Kammer (19) über Zerkleinerungs- und/oder Zermahlmittel (17, 18), (162) in Verbindung steht, und einen Austrittskanal (5), (158) für den Müll von einem nun reduzierten Volumen, welcher Kanal in dem Aussenbereich der unteren Kammer (19) oberhalb der Bodenfläche mündet; **dadurch gekennzeichnet, dass** Mittel (13) zum Erfassen von eisenhaltigen Materialien in der Nähe der Eintrittsleitung (3) montiert sind, wobei eine Abfangvorrichtung (14) an die Erfassungsmittel angeschlossen ist, um zu verhindern, dass Müll in die vorübergehende Deponie eingeleitet wird, der eisenhaltiges Material in einer Menge enthält, die höher ist als ein bestimmter Schwellenwert.

10. Vorübergehende Deponie nach Patentanspruch 9, **dadurch gekennzeichnet, dass** sie Mittel (27) zum wahlweisen Fördern von Müll enthält, welche in dem Austrittskanal (5) angeordnet sind, um den Müll von reduziertem Volumen von der vorübergehenden Deponie an Sammelmittel zu transferieren, welche ausserhalb angeordnet sein können.

11. Vorübergehende Deponie nach Patentanspruch 10, **dadurch gekennzeichnet, dass** die Fördermittel Schneckenmittel (27) enthalten.

12. Vorübergehende Deponie nach Patentanspruch 9, **dadurch gekennzeichnet, dass** die Zerkleinerungs- und/oder Zermahlmittel eine erste Rotationseinheit (17) in Form eines Zerhackers und eine zweite Rotationseinheit (18) in Form einer Hammermühle enthalten, welche kaskadenförmig eine hinter der anderen angeordnet sind.

## Revendications

1. Un procédé pour le traitement et l'élimination des ordures, comprenant les phases suivantes:
- collecte des ordures, en particulier ordures urbaines solides, dans au moins un dépôt (2) situé au-dessous du niveau du sol,
- détection de la présence de tous matériaux ferreux d'une certaine épaisseur à proximité d'un conduit d'entrée (3, 3a) pour les ordures,
- dans le cas de détection positive, interception des ordures de manière à prévenir son introduction dans le dépôt temporaire, sans quoi
- traitement, par brisement et/ou broyage, des ordures collectées dans le dépôt temporaire (2) de manière à en réduire l'encombrement volumétrique;
- convoyage, sélectivement, de quantités prédéterminées d'ordures d'encombrement volumétrique réduit du dépôt temporaire (2) à une ouverture disposée au-dessus du niveau du sol et dirigée vers des moyens de transport,
- dépôt des ordures d'encombrement volumétrique réduit dans une installation de stockage permanente (100) comprenant une cuve de collecte (108) communiquant sélectivement avec une caverne souterraine, préférablement un gisement épuisé (101),
- ouverture sélective de la communication entre la cuve de collecte (108) et la caverne souterraine (101) de manière à y décharger des quantités prédéterminées d'ordures d'encombrement volumétrique réduit.

2. Un procédé selon la revendication 1, **caractérisé en ce que** la phase de convoyage des ordures du dépôt temporaire (2) aux moyens de transport est précédée d'une phase de convoyage d'un gaz pressurisé dans le dépôt temporaire (2).

3. Un procédé selon la revendication 1, **caractérisé en ce que** la phase de déchargement des ordures dans la caverne souterraine (101) est simultanée ou précède légèrement le déchargement dans la caverne d'un fluide sous pression extrêmement haute qui enlève les ordures de la région d'accumulation, en les distribuant dans la caverne.

4. Un procédé selon la revendication 3, **caractérisé en ce que** le fluide sous pression extrêmement haute est une colonne d'eau (105).

5. Un procédé selon n'importe laquelle des revendications précédentes, **caractérisé en ce que** les ordures d'encombrement volumétrique réduit assument la forme d'une poudre ou pulpe humidifiée.

6. Un procédé selon la revendication 5, **caractérisé en ce que** la poudre humidifiée est ensuite compactée pour produire des corps de petites dimensions, par exemple sous forme de granulés, pastilles, oeufs et similaires.

7. Un procédé selon n'importe laquelle des revendications 1 à 6, **caractérisé en ce qu'**une quantité prédéterminée de fluide est placée sous pression dans l'installation de stockage permanente (100) par des moyens d'autoclave alimentés par les premiers moyens de pompe (106).

8. Un procédé selon la revendication 7, **caractérisé en ce que** la caverne souterraine est étanche et est placée sous vide au préalable et maintenue partiellement sous vide par des seconds moyens de pompe (107), les gaz extraits de la caverne par les seconds moyens de pompe (107) étant sélectivement convoyés vers un brûleur ou vers un réseau de distribution ou vers une installation pour le stockage des gaz combustibles.

9. Une installation de stockage temporaire (2) pour le traitement et le dépôt d'ordures selon le procédé selon n'importe laquelle des revendications précédentes, comprenant une chambre inférieure (19) apte à être située au-dessous du niveau du sol, un conduit d'entrée (3, 3a) pour les ordures solides, lequel conduit (3, 3a) communique avec la chambre inférieure (19) avec l'interposition de moyens de brisement et/ou broyage (17, 18), (162), et un conduit de sortie (5), (158) pour les ordures ayant un encombrement volumétrique réduit, lequel conduit termine hors de la chambre inférieure (19) au-dessus du niveau du sol;
**caractérisée en ce que** les moyens (13) pour détecter les matériaux ferreux sont montés à proximité du conduit d'entrée (3), un dispositif d'interception (14) étant accouplé aux moyens de détection de manière à prévenir l'introduction dans le dépôt temporaire des ordures contenant des matériaux ferreux dans une quantité supérieure à une valeur de seuil prédéterminée.

10. Une installation de dépôt temporaire selon la revendication 9, **caractérisée en ce qu'**elle comprend des moyens (27) pour le convoyage sélectif d'ordures situées dans le conduit de sortie (5) de manière à transférer les ordures d'encombrement volumétrique réduit du dépôt temporaire aux moyens de collecte pouvant être situés en son extérieur.

11. Une installation de dépôt temporaire selon la revendication 10, **caractérisée en ce que** les moyens de convoyage comprennent des moyens à vis (27).

12. Une installation de dépôt temporaire selon la revendication 9, **caractérisée en ce que** les moyens de brisement et/ou broyage comprennent une première unité rotative (17) sous la forme d'un hacheur et une seconde unité rotative (18) sous la forme d'un moulin à marteaux disposés en cascade l'un derrière l'autre.
